(19) Europäisches Patentamt
European Patent Office
Office européen des brevets

(11) **EP 2 286 949 A1**

(12) **EUROPEAN PATENT APPLICATION**

(43) Date of publication:
**23.02.2011 Bulletin 2011/08**

(51) Int Cl.:
*B23K 9/10* (2006.01)  *H02M 3/28* (2006.01)
*H02M 5/40* (2006.01)

(21) Application number: **09380147.0**

(22) Date of filing: **18.08.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Desarrollo Gestión Industrial y del medio Ambiente, S.A.**
**39600 Maliaño Cantabria (ES)**

(72) Inventors:
• **Azcondo Sánchez, Francisco Javier**
  **39120 Mortera (Cantabria) (ES)**

• **Casanueva Arpide, Rosario**
  **39007 Santander (Cantabria) (ES)**
• **Brañas Reyes, Christian**
  **39012 Santander (Cantabria) (ES)**
• **Díaz Rodríguez, Francisco Javier**
  **39300 Torrelavega (Cantabria) (ES)**

(74) Representative: **Carvajal y Urquijo, Isabel et al**
**Clarke, Modet & Co.**
**c/ Goya, 11**
**28001 Madrid (ES)**

(54) **Electronic system for optimizing energy transfer for welding equipments**

(57) The present invention relates to an electronic system for optimizing energy transfer for welding equipment comprising:
- an electronic power converter (1), for obtaining a high power factor corrector,
- a plurality of modules (2) formed by resonant power double electronic converter units, that transform the direct voltage into high-frequency alternating current intensity,
- a high-frequency transformer (3) per each resonant module (2)
- a high-frequency rectifier (4) per each transformer (3), and
- an integrated welding arc generation system comprising
- a double threshold optocoupler sensor (6) which detects the overvoltage protection situation,
- a digital control system (5) that controls the optocoupler sensor (6), and
- a discharge condenser (7) to which terminals the different rectifiers (4) in each module (2) and the piece to be welded are connected.

Fig. 2

EP 2 286 949 A1

**Description**

FIELD OF THE INVENTION

The present invention consists of a two-stage power conversion electronic system. The first stage is a power factor corrector with an intensity current sensor adaptable to the power level, so that the power factor correction function takes place for all welding arc intensity levels of arc-welding equipments, and the second is a two-phase resonant converter that produces the discharge, stabilizes the welding arc intensity and determines its level.

BACKGROUND OF THE INVENTION

In gas discharge control applications, it is known the use of electronic power converters known as electronic ballasts. These solutions use current-mode controlled circuits to achieve high output impedance which stabilizes the electric arc. The circuit control also allows permanently adjusting the working point. There exist publications on power supplies in welding applications where resonant converters are used with a current control system. The element that generates the discharge is a circuit which stops working when the discharge is achieved (X.M. Zeng, A.B. Parker, J. Lucas. High-frequency TIG welding power supply with microprocessor control. IEE Proc. Vol 137 Pt. A. No. 4 Jul. 1990). There also exist power supply solutions for electro-discharge erosion equipments that use resonant converters. Resonant converters control is usually carried out by modifying the switching frequency, and it is also possible that this control is done by modifying the pulse width.

In resonant converters, whose switching elements are MOSFET power transistors, the switching frequency is set above the resonance frequency so that the off-on switching takes place without power losses. This is achieved because the intensity has a delay (phase shift) in relation to the voltage. At the same time, it is convenient for the intensity delay not to entail power factor deterioration in the resonant circuit; otherwise transistor conduction losses would be increased. Control based on switching frequency modification may greatly affect the converter performance, since it modifies the phase shift of the resonant current. On the other hand, the performance of electronic power converters highly depends on their switching frequency, due to the losses produced at the transistors and at the magnetic components.

A less well-known aspect is that resonant converters designed for operating with a minimum current phase shift present poor dynamic behavior, and how frequency control affects the dynamic behavior.

Control by pulse-width (duty cycle) may be carried out at a constant switching frequency, but control range is limited by the resonant current phase shift because, if the pulse width reduction is larger than the current phase shift, the condition of *off-on* switching without losses is lost.

There exist studies on arc-welding that state that pulse mode operation results in a better welding arc placement, deeper penetration and better control (George E. Cook, Hussam El-Dean, E.H. Hassa. The effect of High Frequency Pulsing of a Welding Arc.IEEE Trans. on Industry Applications. Vol 1.A 21 No. 5 Sept.-Oct. 1985 pp.1294 - 1299)

DESCRIPTION OF THE INVENTION

The present invention presents a solution in which the control of the maximum intensity working point depends exclusively on the stage that rectifies the power network voltages where there is an active control, while the resonant stage provides stability to the open loop system, providing excellent dynamic characteristics in the arc placing and in pulse mode. The auxiliary discharge generation system is integral to the converter that stabilizes the welding current, thus achieving power density improvements. The system provides continuous intensity without using filters at the output stage, being it possible to reduce the ripple by phase-shifting converter control signals connected in parallel. The intensity level in each module may be modified, without altering the switching frequency and without modifying the duty cycle of the semiconductor devices. Intensity control is achieved by modifying the phase between the two branch control signals working in parallel in the same converter. Unlike other similar control techniques, [T.-F. Wu, H.-P. Yang and C.-M. Pan, Analysis and Design of Variable Frequency and Phase-Shift Controlled Series Resonant Converter Applied for Electric Arc Welding Machines. IEEE 1995 pp. 656 - 661], in this case the capacity to reduce intensity is not limited, since the soft commutation property of the semiconductors (*off-on* without losses) for any phase-shift value between control signals from 0 to 180° is not lost. The present invention consists of an electronic power conversion system that includes a stage that stabilizes the rectified voltage of the conventional power network, being this the only controlled variable in closed loop. A resonant commuted power conversion stage which generates certain intensity adjustable to the necessary value for the arc-welding process is connected to this direct voltage, integrating the generation of the necessary voltage for establishing the electric arc within the capabilities offered by the circuit. The power network connection stage along with the resonant conversion stage and the section generating the welding intensity, form a module that is likely to be connected in parallel with other similar modules in order to increase the welding intensity to the level that a specific operation may require. The system has the peculiarity that the welding arc stability is not fixed by any active control element after the network rectified direct voltage is regulated, but it is achieved by the design of the supply system elements, which provides the equipment with great robustness and stability when faced to such an irregular load as a welding arc and the different arc-welding processes to which it will provide service. The intensity level, however, is determined by a control variable, which is electronically-modified and likely to be automated. The system of arc generation is integrated into the supply system providing energy to the welding after the arc is established. In this way, the welding arc generation does not produce performance or power density losses, in W/volume terms.

An arc-welding supply system requires determining the discharge voltage necessary for achieving the breakdown of the dielectric between the electrode and the piece, and maintaining the welding arc stable at a voltage generally lower than the arc generation and with a high intensity level.

Gas electric arcs involve such a load for the power supply that, if it were supplied from a voltage supply, the system would be unstable (negative small-signal impedance). Therefore, it is necessary to have a supply system with stabilized intensity. In this invention, it is proposed to distinguish the system that stabilizes the welding arc from the control that sets the working point.

The first stage consists of a power factor corrector, that is, an active rectifier that forces the power network intensity to be proportional to the voltage, making the power factor to be virtually a unit. This stage stabilizes the output direct voltage value. The closed loop that stabilizes the direct voltage is the only controller of the welding maximum intensity. This controller fixes the maximum current intensity working point but does not stabilize the welding arc.

The second stage consists of modules formed by double resonant inverter units, novel to this application, that convert direct voltage to alternating intensity and that, if it switches to the appropriate frequency, it ideally behaves like an infinite small-signal impedance, stabilizing the welding arc. This converter achieves a very high performance due to the elimination of the switching losses at the turn-on transient, as well as eliminating switching noises. The resonant converter works with a constant supply voltage and also a constant switching frequency and, however, it enables to reduce the output intensity from the maximum value to zero without losing the property of ideally infinite output impedance and without losing the soft switching property. There exists a control parameter for reducing the output intensity of this converter to the desired value. This parameter is the phase shift of the switching signals of both transistor branches of the converter.

The third stage is a high-frequency transformer which increases the current, making it reach the suitable level for arc-welding operation, and generates the overvoltage that produces the discharge.

The fourth stage is a high speed rectifier which transforms the controlled and stabilized alternating current intensity into direct current intensity with a very high-frequency ripple.

The signals directing the switching, the control phase shift and the protection vis-à-vis overvoltage, are generated by a concurrent digital electronic circuit.

The advantages offered by the invention are the following:

1) The power conversion system is a switched high-frequency system, thus having a reduced size and weight.
2) Offering a very high performance, the supply system provides substantial energy economy.
3) The power factor in the power network is close to the unit, avoiding the injection of harmonics into the network and reducing the efficient intensity demanded from the network.
4) Heat transfer to the pieces to be welded is reduced resulting in smaller deformations.
5) The resulting welding arc is more concentrated in the operation area.
6) The electronic supply module is likely to be connected in parallel with other modules.
7) The high-frequency stage provides inherent stability to the system, without control loop, resulting in a highly robust system for any kind of operation.
8) Neither sparks nor microexplosions are produced by excess heat of the welding arc. The operation results in a stable welding arc, and the operator perceives greater smoothness in the process.
9) The high-frequency component, controlled by activating or not the interleaving mode, overlapped to the continuous intensity component allows: either obtaining a deeper penetration of the welding process (without interleaving mode) or obtaining a greater control over the welding drop (in interleaving mode).
10) The only closed loop control that the system has is included into the first stage connected to the power network. In this way, both the point of operation adjusting system and the system that allows the generation of a stable arc become independent. This provides the system with greater robustness, since the stabilization is independent from the operation point, that is, from the intensity level.
11) The electronic system allows for manually welding, with better sensations for the welder, and also allows automating the process and adapting it to different arc-welding situations in the same process without losing stability.
12) The intensity level adjustment, independent from the welding process, is carried out without modifying the switching frequency and without modifying the control of the first stage of connection to the power network, therefore the performance virtually does not vary according to the point of operation. If the intensity level does not require the activation of all modules, the unnecessary ones are disconnected, making most modules work close to the highest performance level. In this way, a high performance is maintained for loads of very different values.

13) The system has, by design, good capabilities from the point of view of the harmonic content in the power network and electromagnetic compatibility, since the switching is soft in the switching elements of the high-frequency conversion stage.

14) The intensity that the system provides to the welding arc is stabilized for variations in the power network, thus offering identical capabilities in different industrial environments.

The electronic system for optimizing energy transfer for welding equipments of the invention incorporates a power factor corrector with an intensity current sensor adaptable to the power level so that the power factor correction function takes place for all intensity levels of welding arc. In this way, the intensity demanded from the power network is proportional to the network voltage at any point of operation. The output voltage of the power factor correction stage, stabilized for the different possible values of network voltage, is the variable that controls the maximum intensity value of the welding arc. The system, therefore, unlike others, uncouples both the control fixing the operation point and the one fixing the intensity level, obtaining greater robustness.

The system incorporates:

-    a high performance double resonant inverter that, operating at a constant switching frequency, makes the output intensity proportional to the voltage supply and independent from the load, and allows adjusting the output current value by phase-shifting the control signals directing the switching of each transistor branch of the converter.

-    a high-frequency transformer that integrates an overcharge generation system, necessary for the production of the welding arc,

-    an integrated discharge generation system, that is not disabled once the discharge is produced and that provides current intensity to the welding arc, increasing the system performance and power density in W/volume.

The modular architecture of the double resonant electronic inverters of the invention, when working in an intensity mode independent from the load, allows increasing the output intensity by connecting in parallel various modules that provide equal or different intensity.

Transients in pulsing operation mode, having dynamics superior to some pieces of equipment using a closed loop current control, are achieved.

The high-frequency switching resonant power inverters of the invention have such a design that, the load that involves the'arc-welding operation results in a quality factor, Q, of the resonant circuit smaller than the unit, in such a way that the current transient in the generation of arc and in pulsing mode is damped. Under these conditions, the system dynamic bandwidth is equal to that of the switching frequency itself. When high switching frequencies are reached, above 100 kHz the transients of pulsing welding modes of up to 10 kHz are produced in very short periods and without overshoots.

These resonant power inverters:

-    take advantage of the high gain at open circuit voltage when the switching frequency is similar to the resonance to establish the electric arc. Improvements in the welding arc generation are obtained by a control sequence, through which, in the overvoltage protection mode, the resonant circuit switches to a frequency much higher than the one corresponding to the arc-welding operation. The moment the electrode touches the piece to be welded a frequency hopping to the welding point of operation is produced. From experience, it is demonstrated that this system reduces the welding arc generation overvoltage, and requires a smaller-size capacitor that produces the discharge.

-    generate a welding arc with an overvoltage lower than other systems, lengthening the electrode life.

-    reduce the output current ripple by phase-shifting the control of the different synchronized modules operating in interleaving mode, without adding additional filters, obtaining a more controlled and smoother welding operation for the operator and more repetitive results.

-    maintain the performance for different welding intensity values. The power conversion systems obtain their maximum performance at full load. This performance decreases substantially when the output power is reduced from its nominal value. The proposed solution, being modular, avoids performance reduction. When the output intensity level falls below a determined threshold, the unnecessary modules are disconnected and the remaining modules operate close to the nominal value and in maximum performance conditions. The high performance and energy conversion at a high frequency allow reducing the size and weight of the designed equipment. The modularity of the solution allows approaching varied arc-welding processes without losing performance and dynamic capabilities when working with high intensity levels.

- maintain the dynamic capabilities: The power conversion systems usually have slower dynamics as the switched voltage and intensity levels increase. The proposed solution maintains the same dynamic properties regardless of the welding arc intensity level. By operating different modules in parallel, the dynamic capabilities depend on each one of them, and not on the total welding arc intensity level. Therefore, it is possible to establish pulsing operation modes at high frequency and high current, with very abrupt intensity arc edges.

BRIEF DESCRIPTION OF THE DRAWINGS

There follows a description of a series of drawings that help to understand the invention better and that are expressly related to an embodiment of said invention, which is presented as a non-limiting example thereof.

Figure 1 shows a block diagram of the supply system object of this patent.

Figure 2 shows an outline of the power conversion stages that form the supply module of the welding equipment. There are distinguished the power factor corrector, the double-phase resonant inverter, the high-frequency transformer, the rectifier and the discharge capacitor.

Figure 3a shows a graphic of the voltage gain of the resonant inverter for different load values according to the switching frequency.

Figure 3b shows a graphic of the intensity gain of the resonant inverter for different load values according to the switching frequency.

Figure 4 shows the output intensity control technique by use of phase-shifting between the output voltages of the inversion sections.

Figure 5a shows a detailed view of the outline of the resonant inverter.

Figure 5b shows a simplified outline of the outline of Figure 5a, using the fundamental component (the first harmonic) of the voltages and intensities.

In the figures, a series of references corresponding to the elements indicated below are identified:

1. - Electronic power converter
2. - Module of double electronic resonant power converter
3. - Transformer
4. - High-frequency rectifier
5. - Digital control system
6. - Double threshold optocoupler sensor
7. - Condenser

DESCRIPTION OF A PREFERRED EMBODIMENT OF THE INVENTION

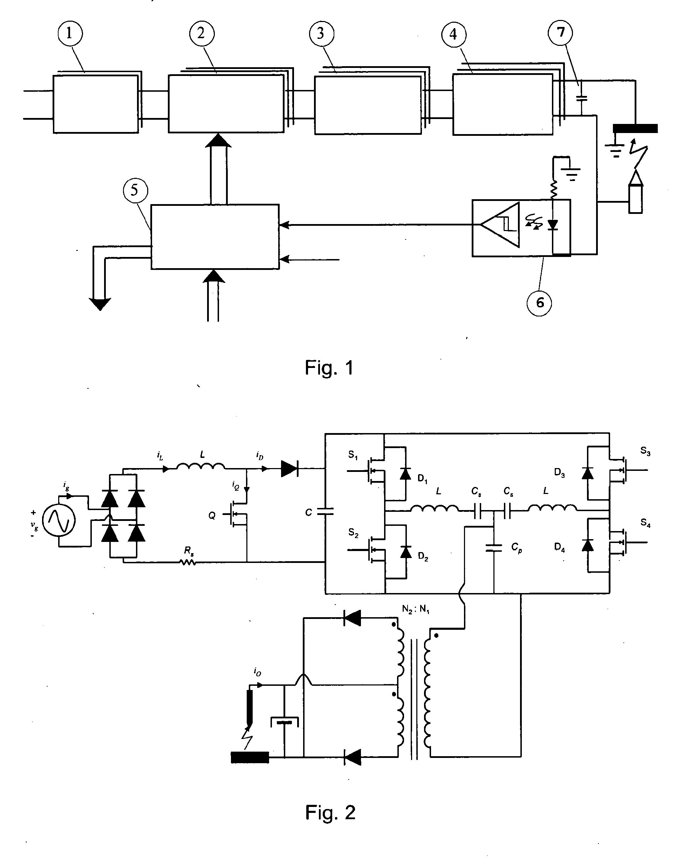

The present invention consists of an electronic supply system for achieving the welding arc establishment and the subsequent optimum current control, without any control loop at the stage that provides the welding current. As it is a modular system it allows increasing the welding current, connecting in parallel as many supply modules as necessary.
The system consists of the following elements, as shown in figures 1 and 2:

- An electronic power converter (1) that transforms the alternating voltage of the network into stabilized direct voltage, obtaining a power factor close to the unit.

- A set of modules arranged in parallel, being each module a double electronic resonant power converter (2), which transforms direct voltage into high frequency alternating current (dc/ac). The output intensity level is fixed by the resonant converter input voltage and the phase-shifting between the control signals of each branch of the resonant converter. This phase shift is the parameter of control of the welding intensity in each module. Once the phase shift is fixed, the intensity of each module is constant and stable, regardless of the load value, even in high speed transients, which allows making a high-frequency pulsing operation.

- A high-frequency transformer (3) per each resonant module (2) that increases the intensity until reaching levels which are useful for the welding operation.

- A high-frequency rectifier (4) per each transformer, that converts alternating current into direct current with a very high-frequency overlapped ripple.

- A digital control circuit (5) that generates the switching signals of the device modules (2) that establish the point of operation, either at maximum intensity or at different intensity reduction levels, and that protects the circuit when the output voltage reaches the maximum established value. The digital control system synchronizes the operation between the different modules (2) reducing the output intensity ripple by phase-shifting its signals for operating in interleaving mode.

- A double threshold optocoupler sensor (6), which detects the overvoltage protection situation (maximum holding voltage). At a protection situation, determined by the maximum threshold, the resonant converter switches to a frequency higher than the nominal one, transmitting little energy to the output, not enough to keep the output voltage, but enough to slow down the voltage drop. The minimum threshold makes the resonant converter switch to the nominal frequency, to either regain the holding maximum voltage or to provide enough energy to establish and maintain the welding arc.

- A discharge condenser (7), where the output of the different rectifiers (4) in each module (2) is connected to one terminal, and the piece to be welded (ground) is connected to the other terminal, which helps maintain the maximum holding voltage and produce an adequate discharge so that the welding arc is generated. This element is the connection point of the different rectifiers of each module and the piece to be welded. This element, along with the double threshold optocoupler sensor (6) whose control is carried out from the digital circuit (5), constitutes the integrated welding arc generation system. Therefore, the system does not require an auxiliary stage to produce the discharge, thus reducing components and generating energy savings.

The digital circuit (5) generates the drive signals of the resonant inverter for achieving the operation in both continuous and alternating mode, and at different frequencies and pulse width in pulsing mode. The digital circuit also establishes the different phase shifts between the control signals of each resonant module to adjust the intensity level. Different modules as the one described are connected in parallel and controlled by a single digital device.

As an embodiment example, there follows the description of an application for the case of a module providing power between 0 - 1kW, which is likely to be connected in parallel with other modules.

The power factor correction stage provides $400\,V_{dc}$ compensating the possible voltage variations in the network. A current sensor system is used, $R_s$ in Fig. 2, adaptable to the output power; so that the power factor correction function takes place at all power levels that the system provides to the welding arc.

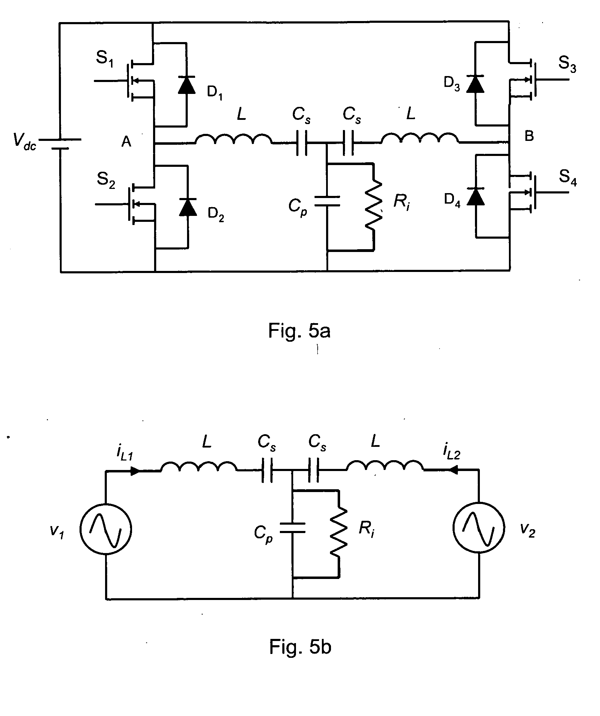

The transistors of the inversion stage switch at high frequency, in the order of the hundreds kHz, generating a square voltage that is filtered by the reactive elements (resonant circuit) of the network of two inductances and three condensers as it is presented in Figures 2 and 5a. In the resonant circuit, each one of the inductances are termed L, the condensers connected in series with the inductances (between the inductances and the load $R_i$), $C_s$ and the condenser connected in parallel with the load, $C_p$.

The resonant circuit acts as a filter that is selective enough to make the design calculations using the first harmonic of the voltages and intensities produced.

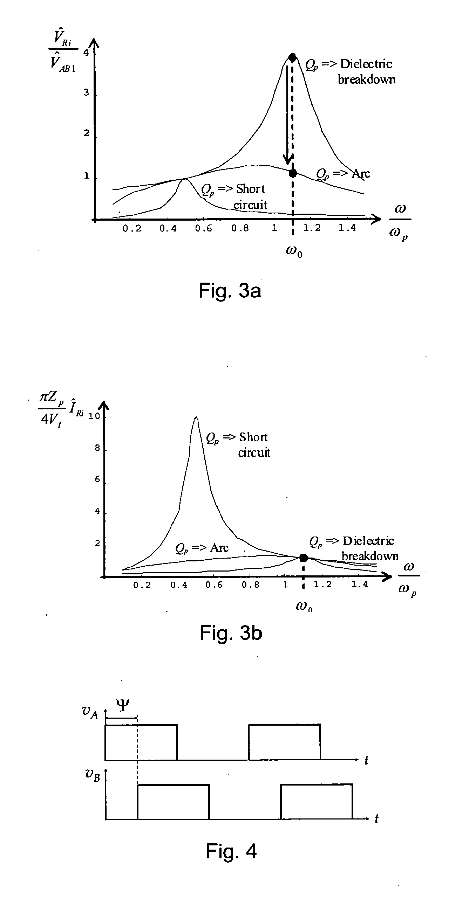

Figures 3a and 3b show the voltage and intensity gain of the resonant inverter for different load values according to the switching frequency. Graph 3a shows a relation between the first harmonic amplitude of the resonant inverter output voltage and the first harmonic amplitude of the voltage applied to the resonant filter input, which is obtained by switching the output voltage of the power factor corrector. Graph 3b shows the relation between the first harmonic amplitude of the output intensity of the resonant inverter and a constant intensity value, which is obtained by dividing the first harmonic of the square voltage of amplitude equal to the output voltage of the power factor corrector into the characterized impedance, $Z_{RI}$, of the resonant inverter. In both graphs it is observed: the capacity of tuning in the circuit in a point where the intensity at load does not depend on the load itself, and the circuit capacity to generate an overvoltage for obtaining the dielectric breakdown. The higher Q values correspond to the period before the load establishment, where Q is the parallel quality factor of the resonant circuit defined as the relation: load resistance of the resonant inverter (equivalent resistance, $R_i$, connected in parallel with $C_p$) divided into the characteristic impedance of the resonant circuit.

Using both cases represented in figures 3a and 3b, the switching frequency is arranged to coincide with the frequency at which the resonant circuit behaves as an intensity supply for the load. The intensity level is determined considering the supply voltage and calculating the phase shift of resonant intensity; delay of the resonant intensity with respect to the voltage generated by the inversion stage. The intensity of the load connected to $C_p$, at the point of operation is

$$\hat{I}_{Ri}\Big|_{\omega=\omega_0} = \frac{2V_{dc}}{\pi Z_{RI}} \qquad\qquad (1)$$

where

$$Z_{RI} = \omega_o L \qquad\qquad (2)$$

with

$$\omega_o = \frac{1}{\sqrt{L\dfrac{C_s C_p}{C_s + C_p}}} \qquad\qquad (3)$$

Being $A$ the relation of condensers $C_p/2C_s$. Where $C_s$ and $C_p$ are the resonant tank condensers indicated herein above.

An adequate quality factor $Q = \dfrac{R_i}{Z_{RI}}$ is used so that there is a phase shift between voltage and intensity that guarantees the soft switching at any point of operation. Knowing the power to be provided, $P_o$, with

$$R_i = \frac{\hat{V}_{Ri}^2}{2P_O} \qquad\qquad (4)$$

and the expression (1) the equivalent load connected to $C_p$, $R_i$ and, subsequently, the voltage and intensity of the equivalent load at full power, are determined.

Knowing the voltage curve - welding process intensity, the voltage of the arc at maximum power is obtained and thus the necessary transformation relation of the high frequency transformer. The maximum intensity offered by the power module is

$$\hat{I}_o = \frac{\pi}{2}\frac{P_o}{V_o} \qquad\qquad (5)$$

Being $V_o$ the welding arc voltage

The relation $\dfrac{\hat{I}_o}{\hat{I}_{R_i}}$ indicates the necessary transformation relation $N_1:N_2$. where $I_o$ is the intensity amplitude at the secondary of the transformer, which, once rectified, is the welding arc intensity, and $I_{Ri}$ is the output intensity amplitude of the resonant circuit, also defined as the intensity at the primary of the transformer or the equivalent load intensity, $R_i$, of the resonant circuit.

Experimental results:

An operation case for a piece of equipment, designed according to the outline in Fig. 2, is presented to offer $\hat{I}_{o\,max}$ = 34$A$, which entails a maximum average value, $\overline{I}_{o,max}$ = 22$A$, the equipment allows reducing the intensity from this value to $\overline{I}_o$ = 2,2$A$ in 16 steps.

The operation conditions are as follows: The pieces to be welded are a 1 mm INOX316 plate; the electrode material is 2% thorium tungsten, with a 1.6 mm diameter. Argon is used as protective gas. The operation is carried out either with or without filler material, no differences in the electric variable behavior being observed. When measuring the intensity by the primary of the transformer, a constant and stable amplitude square wave form is observed which indicates a constant intensity at the load. The voltage observed at the load presents a high-frequency ripple. The output voltage wave form is repetitive at the different switching periods.

The measured power of this arc-welding process was between 220 W and 180 W and the power factor was above 0.98.

During the operation it was observed that the welding arc is more concentrated than the one generated with other supply equipment and that the piece heating, as well as the energy consumption are also smaller using the equipment object of this patent.

In this example, it was verified the application of the discharge generation technique as a result of carrying out the overvoltage protection with an optocoupler and double threshold operational amplifier. The arc generation is produced with the output condenser discharge and a frequency hopping controlled from the integrated circuit. The resonant circuit works at the nominal frequency or at a high-frequency and low energy value (overvoltage protection mode). At the moment the contact between the electrode and the piece is established the voltage falls and the converter immediately reaches its nominal intensity, which it maintains even at the temporary situation of arc establishment. It has been verified that the voltage at which the arc is established is not significantly higher than the arc voltage during the welding operation, lengthening the electrode life.

At the same time, welding operations with 4 modules in parallel that correspond to a 100A arc welding intensity have been carried out. In this case, 5mm-thickness INOX316 pieces were joined using a 2.4mm electrode. The system scalability has been verified since the capabilities were equivalent to the ones obtained with a module operation.

Tests in pulsing mode have been performed from which some first data have been obtained, indicating that by determining the same welding period, if the weld bead length in continuous mode $I_c$ is compared to the weld bead length obtained with a pulsing mode with a pulse width D (0 < D < 1), $I_p$, it is verified that $I_p > D\,I_c$. As the power of the pulsing mode is $DP_c$, being $P_c$ the power of the continuous mode, these first data enable to indicate that there exist energy savings in pulsing mode. If the welded work obtained in continuous and pulsing mode is equivalent, the energy savings mean less heating of the pieces to be welded and therefore less deformation due to heat.

**Claims**

1. Electronic system for optimizing energy transfer for welding equipments **characterized in that** it comprises:

   - a power factor electronic power converter (1), which transforms the alternating voltage of the network into stabilized direct voltage, obtaining a power factor close to the unit,
   - a plurality of modules (2) formed by resonant power double electronic converter units, which transform the direct voltage into high-frequency alternating current intensity,
   - a high-frequency transformer (3) per each resonant module (2) which increases current intensity until it reaches useful levels for the welding operation,
   - a high-speed rectifier (4) per each transformer (3), that converts the alternating current intensity into direct current intensity with a very high-frequency overlapped ripple,
   - an integrated welding arc generation system comprising

     - a double threshold optocoupler sensor (6) that detects the overvoltage protection situation, making the circuit react increasing the switching frequency,
     - a digital control system (5) that synchronizes the operation between the different modules (2) and reduces the output intensity ripple of the rectifier (4), by phase-shifting its signals, protecting the circuit when the output voltage reaches the maximum value set for the welding arc generation, and controlling the optocoupler sensor (6),
     - a discharge condenser (7) where the output of the different rectifiers (4) in each module (2) is connected to one terminal and the piece to be welded (ground) is connected to the other terminal, which helps maintain the holding maximum voltage and produce an adequate discharge so that the welding arc is generated.

Fig. 1

Fig. 2

Fig. 3a

Fig. 3b

Fig. 4

Fig. 5a

Fig. 5b

**Europäisches Patentamt**
**European Patent Office**
**Office européen des brevets**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 6 181 576 B1 (T. IKEDA ET AL) 30 January 2001 (2001-01-30) * column 5, line 40 - column 10, line 36 * * column 12, lines 4-5; figure 2 * ----- | 1 | INV. B23K9/10 H02M3/28 H02M5/40 |
| Y | US 6 177 645 B1 (L.L. CHURCH ET AL) 23 January 2001 (2001-01-23) * column 7, line 47 - column 8, line 42; figure 2 * ----- | 1 | |
| A | GB 2 436 176 A (COMMERGY TECHNOLOGIES LTD) 19 September 2007 (2007-09-19) * page 11, lines 6-14; figures 2a-c * ----- | 1 | |
| A | US 2007/217231 A1 (H. ISHII ET AL) 20 September 2007 (2007-09-20) * abstract; claims; figures * ----- | 1 | |
| A | US 2008/310194 A1 (P.-L. HUANG ET AL) 18 December 2008 (2008-12-18) * paragraph [0003]; figure 1 * ----- | 1 | TECHNICAL FIELDS SEARCHED (IPC) B23K H02M |

The present search report has been drawn up for all claims

| Place of search | Date of completion of the search | Examiner |
|---|---|---|
| Munich | 20 January 2010 | Jeggy, Thierry |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 38 0147

This annex lists the patent family members relating to the patent documents cited in  the above-mentioned European search report.
The members are as contained in the European Patent Office EDP file on
The European Patent Office is in no way liable for these particulars which are merely given for the purpose of information.

20-01-2010

| Patent document cited in search report | | Publication date | Patent family member(s) | | Publication date |
|---|---|---|---|---|---|
| US  6181576 | B1 | 30-01-2001 | JP<br>JP | 3357627  B2<br>2000288729  A | 16-12-2002<br>17-10-2000 |
| US  6177645 | B1 | 23-01-2001 | US | 6023037  A | 08-02-2000 |
| GB  2436176 | A | 19-09-2007 | NONE | | |
| US  2007217231 | A1 | 20-09-2007 | NONE | | |
| US  2008310194 | A1 | 18-12-2008 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **X.M. Zeng ; A.B. Parker ; J. Lucas.** High-frequency TIG welding power supply with microprocessor control. *IEE Proc.,* 04 July 1990, vol. 137
- **George E. Cook ; Hussam El-Dean ; E.H. Hassa.** *The effect of High Frequency Pulsing of a Welding Arc.IEEE Trans. on Industry Applications,* September 1985, vol. 1.A 21, 1294-1299

- **T.-F. Wu ; H.-P. Yang ; C.-M. Pan.** *Analysis and Design of Variable Frequency and Phase-Shift Controlled Series Resonant Converter Applied for Electric Arc Welding Machines,* 1995, 656-661